# EUROPEAN PATENT SPECIFICATION

(11) **EP 3 724 626 B1**
(45) Date of publication and mention of the grant of the patent: **29.09.2021**
(21) Application number: 17823065.2
(22) Date of filing: 12.12.2017
(51) Int. Cl.: G01M 15/02, F02M 25/022, F02M 25/025, F02M 25/032, F02M 35/022, F02M 35/04, F02M 35/10, F02M 31/02, F02M 31/20

(54) **DEVICE, METHOD AND USE FOR CONDITIONING INTAKE AIR FOR TESTING INTERNAL COMBUSTION ENGINES**
PRODUKT, METHODE UND BENUTZUNG FÜR EINE AUFBEREITUNG VON EINLASSLUFT ZUM TESTEN VON BRENNKRAFTMASCHINEN
DISPOSITIF, PROCÉDÉ ET UTILISATION POUR CONDITIONNER DE L'AIR D'ADMISSION POUR TESTER DES MOTEURS À COMBUSTION INTERNE

(43) Date of publication of application: 21.10.2020
(73) Proprietor: HORIBA Europe GmbH, 64293 Darmstadt (DE)
(72) Inventor: DENSATES, José Maria, 46022 Valencia (ES); BENAJES, Jesús, 46022 Valencia (ES); SERRANO, José Ramón, 46022 Valencia (ES); BERMUDEZ, Vincente, 46022 Valencia (ES); PIQUERAS, Pedro, 46022 Valencia (ES); GOMEZ, Javier, 64293 Darmstadt (DE); BENDER, Stefan, 64293 Darmstadt (DE)
(74) Representative: Maslanka Kubik, Dorota Irena
(86) International application number: PCT/EP2017/082452
(87) International publication number: WO 2019/114935

(56) References cited:
- EP-A1- 3 098 586
- WO-A2-02/42730
- DE-A1- 4 015 818
- DE-A1-102013 110 199

## Description

### Field of the Invention

The present invention generally relates to devices for conditioning intake air for testing internal combustion engines, and more specifically to a device and a method for conditioning the temperature and humidity of intake air at high pressure.

### Prior Art

Real driving emissions (RDE) have been recently regulated in Europe and therefore engine manufacturers need to test engines under variable room conditions (pressure, temperature and humidity). Specifically, extended conditions homologation imposes homologation at 1300 m over sea level.

Engine manufacturers need to be able to emulate in their labs the atmospheric conditions of different parts of the world to ensure they can both overcome emissions regulations and fulfill customers' expectations in terms of performance, reliability and fuel consumption.

This conditioning can be done by means of extremely costly round-robin tests. These tests imply sending operators and shipping testing apparatus to several locations where ambient is representative of certain desired conditions. This is an expensive and below optimum technique in the early development stages. During round-robin testing campaigns engineers are far from ideal laboratory instrumentation conditions for engine testing resulting in limited engine diagnosis. Although round-robin testing is still needed for the final validation stage, it is not optimum for early stages of engine development or calibration.

Another possibility is to fully condition the test cell room or some space within the test room. This second option is extremely expensive due to the required civil works and huge energy consumption. The cell structure (or a specific space therein) must withstand vacuum and overpressure conditions, which makes civil work quite expensive and space demanding. Also, the air volume to be conditioned in terms of both temperature and humidity is rather large, with high thermal losses and difficult control of desired conditions at the engine intake point. Such installations are disclosed, for example, from US2004186699. However, the implementation thereof in testing facility premises is not common due to the aforementioned drawbacks.

The inventors of the present invention have already patented several solutions that overcome some of the previous drawbacks (see WO2012104454, WO2015110683 and WO2016116642). The solutions disclosed in said prior art have given rise to an atmosphere simulator called MEDAS (Bermudez, V., Serrano, J.R., et al. "Analysis of the role of altitude on diesel engine performance and emissions using an atmosphere simulator" International Journal of Engine Research 2017, Vol. 18(1-2) 105-117).

However, MEDAS device can only regulate engine intake and exhaust pressure without controlling engine intake air humidity and providing quite a limited control on intake air temperature. The regulation of intake air temperature by said device is constrained by the desired intake pressure. Consequently, MEDAS does not offer enough freedom for independently emulating both variables (pressure and temperature), as is usually the case in real driving conditions for RDE homologation.

Some prior art documents attempt to solve some of these drawbacks by providing means for increasing humidity of the intake air for testing internal combustion engines (see, for example, ES 2535501T3). In this case, steam is injected in a stream of air at room pressure for increasing the humidity thereof. However, this solution is not possible at high pressure conditions (for example, 3 bar) because in that case steam must be generated at high pressure and at a temperature higher than 100°C (for example, about 130°C). This device would then be a high pressure boiler and would entail a large risk, unacceptable according to existing regulations.

Other known devices for conditioning intake air for internal combustion engine testing include those manufactured by AVL, Sierra and Control Sistem. However, those devices are based either on high pressure, low flow rotary-volumetric compressors (Control Sistem) or on low pressure, high flow turbofans (AVL and Sierra). Neither of them is adequate to offer a good balance between high altitude simulation (high pressure ratio), high air flow rate (high engine displacement) and low energy consumption (low Ampere).

Another device is shown by WO 0242730 A2.

Therefore, there is still a need for a device able to provide full control of engine intake air conditions (specifically, temperature and humidity) independently from desired pressure. There is also a need for a device able to perform said control in a highly dynamic and energy efficient way. Furthermore, there is a need to provide a device able to perform said control requiring little or no civil works or on-site adaptations. Finally, there is also a need for a device able to perform said control which can also be moved between different engine cells of a testing facility.

### Summary of the Invention

The present invention discloses a device, a method and a use for conditioning intake air for testing internal combustion engines which fulfill at least some of the needs previously mentioned.

According to a first aspect, the invention provides a device for conditioning intake air for testing internal combustion engines according to claim 1.

The conditioned intake air at the outlet point of the device of the invention is suitable for feeding directly to an internal combustion engine to be tested or to an additional device for further conditioning the pressure thereof.

According to a second aspect, the present invention provides a method for conditioning intake air for testing internal combustion engines, comprising the steps of:
(a) increasing the pressure of the intake air;
(b) optionally lowering the temperature and humidity of the intake air;
(c) optionally increasing the temperature of the intake air; and
(d) feeding the intake air directly to an internal combustion engine to be tested or to an additional device for further conditioning the pressure thereof.

According to a third aspect, the invention provides a use of the device according to the first aspect of the invention, for conditioning the pressure, temperature and humidity of the intake air to be fed to an internal combustion engine for testing thereof.

### Brief description of the Drawings

The present invention will be better understood with reference to the following drawings which illustrate preferred embodiments of the invention, provided by way of example, and which must not be construed as limiting the invention in any way.
Figure 1 shows two graphs depicting the range of temperature and pressure of an engine boosting emulator according to a preferred embodiment of the invention provided with an E-heater at 23 kW.
Figure 2 shows two graphs depicting the range of temperature and pressure of an engine boosting emulator according to a preferred embodiment of the invention provided with an E-heater at 46 kW.
Figure 3 shows the range of humidity for an engine boosting emulator according to a preferred embodiment of the invention provided with a specifically designed bubble reactor.
Figure 4 is a schematic diagram of a device according to the preferred embodiment of the present invention.

### Detailed description of the Invention

The device according to the preferred embodiment of the present invention comprises an engine boosting emulator (EBOR) which, using energy in the most efficient way can provide intake air at a given controlled temperature and pressure.

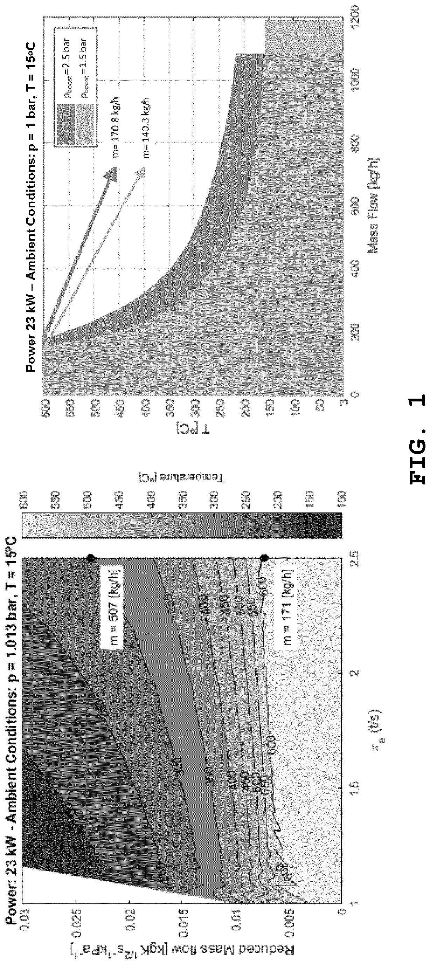

Provided with a low power E-heater (23 kW) it can be used for boosting naturally aspirated multi-cylinder or single cylinder engines with a controlled flow of air at a controlled temperature up to 200°C. In this case, conditions downstream of the compressor of a turbocharger are simulated for boosting directly to the engine or through an air-charge cooler. The full range of pressure and temperature that can be achieved in this case is shown in Figure 1.

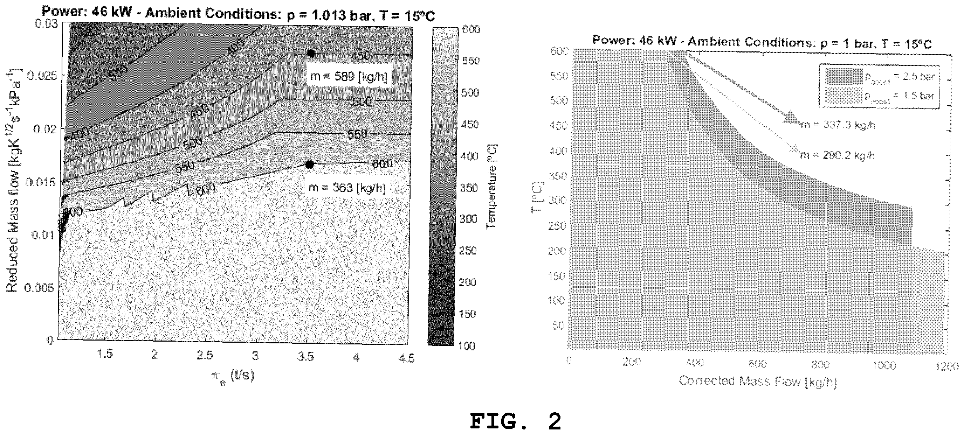

A further range can be achieved by increasing the E-heater power. Figure 2 shows how an increment up to 46 kW for the E-heater can provide air temperatures up to 600°C. In this case the EBOR can be used as a gas stand for testing turbochargers or any other hot flow element of the engine exhaust line (exhaust gas depollution systems -catalysts, DPF, SCR, NOx traps-, EGR coolers, exhaust gas coolers, ...). Therefore the range of use beyond the engine intake or the elements of the intake line up to the engine exhaust line increases.

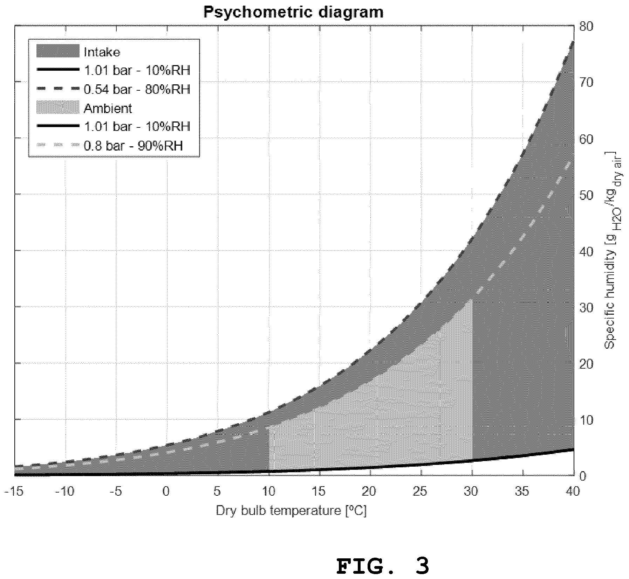

If EBOR is placed upstream of a specifically designed bubble reactor (herein referred to as BUBRER), it can also provide intake air with a controlled relative humidity. Therefore, as shown in Figure 3, the use of EBOR + BUBRER can increase humidity of ambient air up to 80% at a maximum air supply temperature of 40°C and can reduce specific humidity down to 1,82 [g(H₂O)/kg(dry air)] (100% relative humidity at 2,5 bar and 3°C) at a minimum air supply temperature of 3°C.

Figure 3 shows in the light grey area the accepted room conditions and in the dark grey area the achievable air humidity conditions that can be provided by using EBOR+BUBRER.

Furthermore, intake air at controlled temperature and humidity can also be provided to a known engine pressure conditioning device such as MEDAS, or to any other pressure conditioning means. In this case, the device disclosed offers important synergies if combined with MEDAS type systems for full control of the three variables of the intake air, i.e. pressure, temperature and humidity. Synergy means that it is possible to achieve even less energy consumption while obtaining an increased operative range in the combination of both devices.

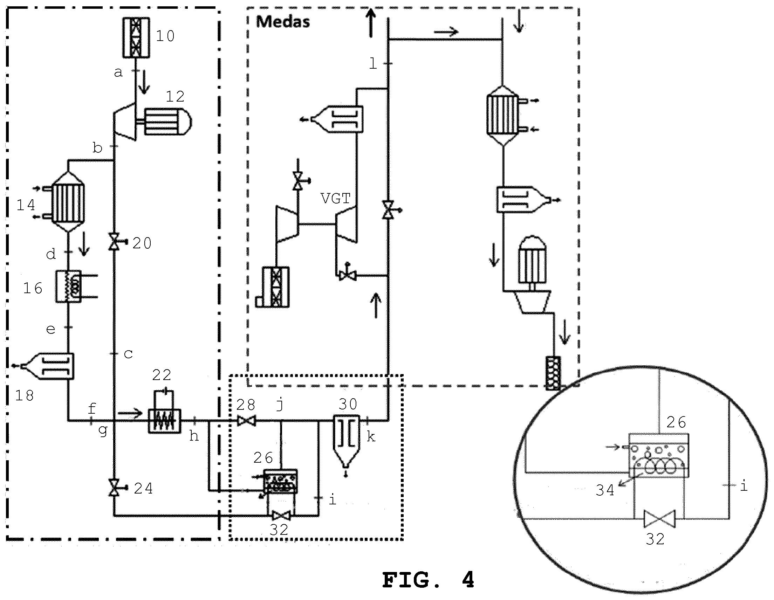

Figure 4 shows a schematic diagram of a device according to the preferred embodiment of the present invention. The dotted area on the top-right hand side of the diagram encloses a device for further conditioning the pressure of the intake air, and more specifically this is a diagram for a MEDAS device. The disclosure for said device can be found in WO2012104454, WO2015110683 and WO2016116642, and therefore a detailed description thereof will be omitted herein.

The dotted area on the left hand side of the diagram encloses an engine boosting emulator (herein referred to as EBOR) and the dotted area on the bottom-right hand side encloses a bubble reactor humidifier system (herein referred to as (BUBRER). These two areas have been drawn for the sake of clarity, but do not represent two separate devices. The device according to a preferred embodiment of the present invention comprises both the EBOR and the BUBRER. The device according to a further preferred embodiment of the present invention comprises all the elements shown in Figure 4, including those included in the MEDAS device.

The engine boosting emulator group mainly fulfils the tasks of drying and regulating the temperature of the intake air, as will be further described herein below. The humidifier is based on a bubble reactor and mainly fulfils the tasks of increasing the humidity of the intake air stream and removing spurious water droplets therefrom.

As can be seen in Figure 4, the device according to the preferred embodiment of the present invention comprises
- an air filter (10) before an inlet point (a) of a line for transporting intake air from the inlet point (a) to an outlet point (k);
- a line for transporting intake air from the inlet point (a) to the outlet point (k), the line further comprising the following components between said inlet point (a) and said outlet point (k);
- a mechanical compressor (12) for compressing intake air to a desired pressure and temperature values;
- a water-to-air cooler (14) for lowering the temperature of the intake air;
- a chiller (16) for lowering the temperature and the humidity of the intake air;
- a first cyclonic separator (18) for removing condensed humidity from the intake air;
- a first bypass valve (20) for bypassing the water-to-air cooler (14), the chiller (16) and the first cyclonic separator (18);
- a heater (22) for increasing the temperature of the intake air;
- a second bypass valve (24) for bypassing the heater (22) ;
- a humidifier (26) located between the heater (22) and the outlet point (k) and a first 0/1 valve (28) for allowing/preventing intake air to go/from going through said humidifier (26), the humidifier (26) also being bypassed by the second bypass valve (24);
- a water-to-air heat exchanger (34) inside said humidifier (26) and a second 0/1 valve (32) for allowing/preventing intake air to go/from going through said water-to-air heat exchanger (34); and
- a second cyclonic separator (30) before outlet point (k) for removing condensed humidity from the intake air.

The conditioned intake air at the outlet point (k) is suitable for feeding directly to an internal combustion engine to be tested. The conditioned intake air at the outlet point (k) can also be fed to an additional device for further conditioning the pressure thereof. The additional device (or means) for further conditioning the pressure of the intake air can be an integral part of the device according to the present invention, or can be a separate device to which the present device can be coupled.

According to the preferred embodiment of the present invention, the heater (22) is an electrical heater.

The device shown in Figure 4 can be used in several modes.

### Air drying and heating.

The intake air is sucked at room conditions by the mechanical compressor (12) placed between point (a) and point (b) in Figure 4. The mechanical compressor (12) is preferably an electrically driven centrifugal compressor that provides the required pressure to the intake air stream in order to overcome the pressure losses of the ducting system caused by the desired air mass flow.

Downstream of point (b), the air stream can follow two paths. It can flow through the first bypass valve (20) located between points (b) and (c) or through the drying line of the elements placed between points (b) and (f). If the whole intake air stream is to be dried, then the first bypass valve (20) between points (b) and (c) is closed. If only a portion of the intake air stream is to be dried, the first bypass valve (20) regulates the amount of intake air that must bypass the drying line between points (b) and (f). The device therefore takes advantage of ambient humidity and does not dry all the intake air but just the required percentage. As a result, inefficient energy consumption in full drying followed by humidification is avoided.

The portion of intake air stream that is to be dried follows the path through a water-to-air cooler (14) placed between points (b) and (d) followed by a chiller (16) placed between points (d) and (e) and a first cyclonic separator (18) for removing condensed humidity placed between points (e) and (f). The water-to-air cooler (14) and the chiller (16) reduce the temperature of said portion of intake air and therefore humidity is condensed. The water-to-air cooler (14) allows taking advantage of chilling-water available in the testing facility or can simply use a tower-water. There is preferably no water removal at point (d) (between the cooler (14) and the chiller (16)) in order to reduce the pressure loss on the intake air stream. All water condensates are removed at the first cyclonic separator (18) placed between points (e) and (f).

Dried air from point (f) is mixed with non-dried air from point (c) to achieve the target humidity at point (g). As shown in figure 4, point (g) is the intersection point between the path from cyclonic separator (18) and the path from first bypass valve (20).

If dried air is to be heated up, then the second bypass valve (24) and a second 0/1 valve (32), both between points (g) and (i), are fully closed. Therefore the whole intake air stream passes through the electrical heater (22) placed between points (g) and (h). The electrical heater (22) increases the intake air temperature up to a desired value. It is worth noting that the relative position of the electrical heater (22) between points (g) and (h) is very relevant. This way, if the whole intake air stream was not previously dried, but rather passed through point (c), the temperature increase achieved in the mechanical compressor (12) is used to reduce the energy consumption in the electrical heater (22).

Since the intake air needs to be dry, the fist 0/1 valve (28), just downstream of point (h), is kept open. If the first 0/1 valve (28) is kept open, the humidifier (26), between points (h) and (j), is bypassed. As shown in figure 4, point (j) is the intersection point between the path from first 0/1 valve (28) and the path from humidifier (26).

From point (j) the intake air stream flows across the second cyclonic separator (30) placed between point (j) and point (k). This second cyclonic separator (30) removes condensed humidity or dust from the intake air stream.

After point (k), the dried intake air stream is driven to the engine intake at the target humidity and temperature. Also the intake air stream can be carried to an intake air pressure conditioning system such as a MEDAS device, as shown in Figure 4.

### Air drying and cooling.

If, at point (g), the dried air temperature is too high and it needs to be cooled down, then the second bypass valve (24) and the second 0/1 valve (32), both between points (g) and (i), are fully open. At the same time, the electrical heater (22) placed between points (g) and (h) is switched off. If the intake air stream must be kept dry, the first 0/1 valve (28) located just downstream of point (h) is kept open.

The intake air streams after points (h) and (i) are combined and then will be at the same thermodynamic conditions than at point (g). Afterwards, the intake air stream continues its way towards the second cyclonic separator (30) placed between point (j) and point (k). This second cyclonic separator (30) removes condensed humidity or dust from the air stream.

After point (k) the dried intake air stream is driven to the engine intake at desired humidity and at a given temperature equal to temperature at point (g). If the intake air stream is carried to MEDAS, as shown in Figure 4, further temperature reduction can be obtained by expanding the air stream in the variable geometry turbine (VGT) of MEDAS. In other words, the temperature at point (1) can be lower than the temperature at point (k) due to flow expansion through a variable geometry turbine.

Therefore, using the device here described, MEDAS increases its temperature control performance through the increment of pressure in point (k) with respect to room pressure. This pressure increment allows increasing expansion ratio in the variable geometry turbine of MEDAS and therefore increasing temperature reduction range achievable at point (1) of MEDAS.

### Air humidifying and heating.

As previously discussed, downstream of point (b) the air stream can follow two paths. In this case, if the intake air stream is to be humidified, then the first bypass valve (20) between points (b) and (c) is kept open. Therefore, the device takes advantage of ambient humidity and no ambient humidity is lost. In addition, the chiller (16) placed between points (d) and (e) is switched off. This layout and mode of operation avoids the energy consumption in drying and subsequent humidification.

The partially humid (ambient humidity) intake air stream at point (g) is at high pressure and high temperature according to the compression process undergone in the mechanical compressor (12). The specific humidity has not changed from its original value at room conditions at this stage.

If the objective is to increase the specific humidity of the intake air stream, then the first 0/1 valve (28) placed between points (h) and (j) is closed. So from point (g) the intake air stream can only follow two ways. On the one hand, it can flow through points (g), (h) and (j) by flowing first through the electrical heater (22) and secondly through the humidifier (26). On the other hand, the intake air stream can flow directly from point (g) to point (i) bypassing both the electrical heater (22) and the humidifier (26).

The second bypass valve (24) between points (g) and (i) decides how much mass flow will pass through the humidifier (26), where the intake air stream achieves 100% relative humidity (RH), or how much mass flow will be bypassed. The mixture ratio between bypassed flow and 100% RH flow will set the target specific humidity in the flow.

The electrical heater (22) between points (g) and (h) is a key to increase the specific humidity in the saturated (100% RH) stream, since, for a saturated flow, the higher the temperature the higher the specific humidity. The humidifier (26) between points (h) and (j) is a bubble reactor-type humidifier at which a stream of air bubbles flows across a mass of water. A zoom of the humidifier area is shown at the bottom right corner of Figure 4, where the bubbles of air have been depicted as passing through the water mass.

Finally, the humidifier (26) between points (h) and (j) needs the water mass to be hot in order to keep the air hot and the specific humidity high. On the one hand, the electrical heater (22) between points (g) and (h) heats the intake air stream and the air in contact with the water mass heats the water while getting saturated with water. On the other hand, when the temperature of the bypassed air at point (g) is higher than the water mass temperature, the second 0/1 valve (32) is closed. Since the low humidity intake air stream at point (g) can be very hot because of the compression process, this energy is used to heat the air through a water-to-air heat exchanger (34) located inside the humidifier (26) and submerged into the water mass.

In summary, if the low humidity bypassed intake air is hotter than the water mass, the second 0/1 valve (32) closes to allow this intake air to transfer its heat to the water without being in contact therewith (through the air-to-water heat exchanger (34)). In this case, the mixture of the 100% RH stream at point (j) and the low humidity stream at point (i) will be done at almost the same temperature and quite close to the water temperature.

However, in the case that the low humidity bypassed intake air is colder than the water, the second 0/1 valve (32) opens to prevent this air from removing heat from the water. In this second case, the mixture of the 100% RH stream at point (j) and the low humidity stream at point (i) will be done at different temperatures. Consequently, some water can condensate due to the fact that the temperature will be lower at point (i) than at point (j). Therefore, the intake air stream is forced to go through the second cyclonic separator (30) placed between points (j), (i) and point (k). This second cyclonic separator (30) removes possible condensed humidity.

The relative layout of the electrical heater (22), the bypass and 0/1 valves (20, 24, 28, 32) and the humidifier (26) is a key in order to save energy and reduce the number of elements needed to achieve maximum performance for the device. For example, since the electrical heater (22) is not submerged inside the water, the system is intrinsically safe and high pressure steam (risk of BUBRER explosion) cannot been produced by accident. The reason is that the heat transfer to water is always done through a vector that is the air flow, i.e., if air stream stops heat transfer stops. It means, there is not any risk of generating high pressure steam at pressures higher than surge and overspeed limits of the centrifugal compressor (2 barG at the 23 kW mentioned design). Over 2barG the compressor would be broken and air stream would stop and air flow could not be any more the heat-vector.

### Air humidifying and cooling.

Combining some of the operations described hereinabove, the air humidifying and cooling can be easily achieved with the device shown in Figure 4.

After point (k) the humidified intake air stream is driven to the engine intake at a target specific humidity and at a given temperature, close to the water temperature. If the intake air stream is carried to MEDAS, as shown in Figure 4, further temperature reduction can be obtained by expanding the intake air stream in the variable geometry turbine (VGT) of the device MEDAS. In other words, temperature at point (1) can be lower than temperature at point (k) due to the flow expansion through VGT. In case some condensates are produced during the flow expansion, this will be corrected with the bypass valve between points (g) and (i) to keep the target specific humidity at point (l).

Therefore, using the present invention, MEDAS increases its temperature control performance through the increment of pressure in point (k) with respect to room pressure. This pressure increment allows increasing the expansion ratio in the variable geometry turbine and therefore increasing the temperature reduction range achievable at point (1) of MEDAS. At the same time, the intake air at point (1) will have a controlled specific humidity different from room humidity and controlled by the present device.

The preferred embodiment of the present invention also provides a method for conditioning intake air for testing internal combustion engines, comprising the steps of:
a) increasing the pressure of the intake air;
b) optionally lowering the temperature and the humidity of the intake air, preferably using a water-to-air cooler followed by a chiller, thereby reducing the overall energy consumption of step (b);
c) optionally increasing the temperature of the intake air; and
d) feeding the intake air directly to an internal combustion engine to be tested or to an additional device for further conditioning the pressure thereof.

According to another preferred embodiment of the invention, the method further comprises filtering the intake air before increasing the pressure thereof.

According to another preferred embodiment of the invention, the method further comprises removing condensed humidity from the intake air after said step (b).

According to another preferred embodiment of the invention, the method further comprises before step (d), a step of increasing the humidity of the intake air. The temperature of the water used in said step of increasing the humidity of the intake air is preferably increased using part of the intake air itself.

According to another preferred embodiment of the invention, the method further comprises removing condensed humidity from the intake air before said step (d).

According to another preferred embodiment of the invention, step (d) comprises further conditioning the pressure of the intake air before feeding the intake air directly to an internal combustion engine to be tested.

The present invention also provides the use of the device as described herein, for conditioning the pressure, temperature and humidity of the intake air to be fed to an internal combustion engine for testing thereof.

Although the present invention has been described with reference to preferred embodiments thereof, the skilled person will understand that modifications and variations to the described embodiments can be applied without departing from the scope of the present invention.

According to the above, the present invention discloses a device able to provide full control of engine intake air conditions (specifically, temperature and humidity) independently from desired pressure, in a highly dynamic and energy efficient way.

Some of the advantages of the present invention over the prior art are described below:
- It offers a good balance between high altitude simulation (high pressure ratio), high air flow rate (high engines displacement) and low energy consumption.
- It requires little or no civil works or on-site adaptations for its installation in the labs.
- It can be moved between different engine cells of a testing facility (high mobility).
- It offers clear synergies with altitude simulation devices.
- It takes advantage of conditions already existing in the ambient air (the device does not dry or humidify all the intake air but just the required percentage), in order to avoid inefficient energy consumption.
- It takes advantage of synergic use of the temperature from compression and expansion processes to heat or cool the air and the water used for humidifying dry air, in order to avoid inefficient energy consumption.
- The election of turbomachinery for compression (consequently heating) and expansion (consequently cooling) and humidifying by bubble reactor, allows a dynamic (fast enough) change of atmospheric variables.
- The precise combination of elements in the layout (especially the electrical heater and the chiller) allows doing several functions without needing their duplication and without moving from their position with respect to the rest of elements (thanks to a smart location of bypass and 0/1 valves).
- As a consequence of the above, the cost of the device deployment and use is highly competitive.

## Claims

1. A device conditioning intake air for testing internal combustion engines, comprising:
- a line transporting intake air from an inlet point (a) to an outlet point (k), the line further comprising the following components between said inlet point (a) and said outlet point (k);
- a mechanical compressor (12) compressing intake air to desired pressure and temperature values;
- a drying line of elements placed between points (b) and (f), downstream from the mechanical compressor (12), said elements comprising:
▪ a chiller (16) lowering the temperature and the humidity of the intake air,
▪ a first cyclonic separator (18) removing condensed humidity from the intake air;
- a first bypass valve (20) bypassing both the chiller (16) and the first cyclonic separator (18);
- a heater (22) increasing the temperature of the intake air, located downstream from an intersection point (g) between a path from the cyclonic separator (18) and a path from the first bypass valve (20);
- a second bypass valve (24) bypassing the heater (22);
- a humidifier (26) located between the heater (22) and the outlet point (k); and
- a first 0/1 valve (28) allowing/preventing intake air to go/from going through said humidifier (26), the humidifier (26) also being bypassed by the second bypass valve (24);
whereby the conditioned intake air at the outlet point (k) is fed directly to an internal combustion engine to be tested or to an additional device further conditioning the pressure thereof.

2. The device according to claim 1, further comprising an air filter (10) before the inlet point (a) of the line.

3. The device according to any of previous claims, further comprising a water-to-air cooler (14) before the chiller (16), the water-to-air cooler (14) also being bypassed by the first bypass valve (20).

4. The device according to any of previous claims, further comprising a water-to-air heat exchanger (34) inside said humidifier (26) and a second 0/1 valve (32) allowing/preventing intake air to go/from going through said water-to-air heat exchanger (34).

5. The device according to any of previous claims, further comprising a second cyclonic separator (30) before the outlet point (k) removing condensed humidity from the intake air.

6. The device according to any of previous claims, wherein the heater (22) is an electrical heater.

7. The device according to any of previous claims, further comprising a pressure conditioning means located downstream from the outlet point (k) further conditioning the pressure of the intake air before feeding thereof to an internal combustion engine to be tested.

8. A method of conditioning intake air for testing internal combustion engines with use of the device according to any of claims 1 to 7, comprising the steps of:
a) increasing the pressure of the intake air;
b) optionally lowering the temperature and the humidity of the intake air;
c) optionally increasing the temperature of the intake air; and
d) feeding the intake air directly to an internal combustion engine to be tested or to an additional device further conditioning the pressure thereof.

9. The method according to claim 8, further comprising filtering the intake air before increasing the pressure thereof.

10. The method according to any of claims 8 to 9, comprising the step (b) of lowering the temperature and the humidity of the intake air using a water-to-air cooler followed by a chiller, thereby reducing the overall energy consumption of said step (b).

11. The method according to any of claims 8 to 10, comprising the step (b) of lowering the temperature and the humidity of the intake air, further comprising removing condensed humidity from the intake air after said step (b) using a first cyclonic separator (18).

12. The method according to any of claims 8 to 11, further comprising, before step (d), a step of increasing the humidity of the intake air.

13. The method according to claim 12, further comprising using part of the intake air itself to increase the temperature of the water used in said step of increasing the humidity of the intake air.

14. The method according to any of claims 8 to 13, further comprising removing condensed humidity from the intake air before said step (d) using a second cyclonic separator (30).

15. The method according to any of claims 8 to 14, wherein step (d) comprises further conditioning the pressure of the intake air before feeding the intake air directly to an internal combustion engine to be tested.

16. Use of the device according to any of claims 1 to 7, for conditioning the pressure, temperature and humidity of the intake air to be fed to an internal combustion engine for testing thereof.

## Patentansprüche

1. Vorrichtung zur Konditionierung von Ansaugluft zum Testen von Verbrennungsmotoren, umfassend:
- eine Leitung, die Ansaugluft von einem Einlasspunkt (a) zu einem Auslasspunkt (k) transportiert, wobei die Leitung ferner die folgenden Komponenten zwischen dem Einlasspunkt (a) und dem Auslasspunkt (k) umfasst;
- einen mechanischen Kompressor (12), der die Ansaugluft auf gewünschte Druck- und Temperaturwerte komprimiert;
- eine Trocknungsleitung aus Elementen, die zwischen den Punkten (b) und (f) stromabwärts des mechanischen Kompressors (12) angeordnet sind, wobei die Elemente umfassen:
▪ einen Kühler (16), der die Temperatur und die Feuchtigkeit der Ansaugluft senkt,
▪ einem ersten Zyklonabscheider (18), der kondensierte Feuchtigkeit aus der Ansaugluft entfernt;
- ein erstes Bypass-Ventil (20), das sowohl den Kühler (16) als auch den ersten Zyklonabscheider (18) umgeht;
- eine Heizung (22), die die Temperatur der Ansaugluft erhöht und stromabwärts von einem Schnittpunkt (g) zwischen einem Pfad von dem Zyklonabscheider (18) und einem Pfad von dem ersten Bypass-Ventil (20) angeordnet ist;
- ein zweites Bypass-Ventil (24), das die Heizung (22) umgeht;
- einem Befeuchter (26), der zwischen der Heizung (22) und dem Auslasspunkt (k) angeordnet ist; und
- ein erstes 0/1-Ventil (28), das zulässt/verhindert, dass Ansaugluft durch den Befeuchter (26) geht/geht, wobei der Befeuchter (26) auch durch das zweite Bypass-Ventil (24) umgangen wird;
wobei die konditionierte Ansaugluft am Austrittspunkt (k) direkt einem zu prüfenden Verbrennungsmotor oder einer zusätzlichen Vorrichtung zur weiteren Konditionierung des Drucks zugeführt wird.

2. Vorrichtung nach Anspruch 1, ferner umfassend einen Luftfilter (10) vor dem Einlasspunkt (a) der Leitung.

3. Vorrichtung nach einem der vorhergehenden Ansprüche, ferner umfassend einen Wasser-Luft-Kühler (14) vor dem Kühler (16), wobei der Wasser-Luft-Kühler (14) auch durch das erste Bypass-Ventil (20) umgangen wird.

4. Vorrichtung nach einem der vorhergehenden Ansprüche, ferner umfassend einen Wasser-Luft-Wärmetauscher (34) im Inneren des Befeuchters (26) und ein zweites 0/1-Ventil (32), das zulässt/verhindert, dass Ansaugluft durch den Wasser-Luft-Wärmetauscher (34) geht/geht.

5. Vorrichtung nach einem der vorhergehenden Ansprüche, ferner umfassend einen zweiten Zyklonabscheider (30) vor dem Auslasspunkt (k), der kondensierte Feuchtigkeit aus der Ansaugluft entfernt.

6. Vorrichtung nach einem der vorhergehenden Ansprüche, wobei die Heizung (22) eine elektrische Heizung ist.

7. Vorrichtung nach einem der vorhergehenden Ansprüche, ferner umfassend ein Druckkonditionierungsmittel, das stromabwärts von dem Auslasspunkt (k) angeordnet ist und den Druck der Ansaugluft weiter konditioniert, bevor diese einem zu prüfenden Verbrennungsmotor zugeführt wird.

8. Verfahren zur Konditionierung von Ansaugluft zum Prüfen von Verbrennungsmotoren unter Verwendung der Vorrichtung nach einem der Ansprüche 1 bis 7, umfassend die folgenden Schritte:
a) Erhöhen des Drucks der Ansaugluft;
b) optionales Senken der Temperatur und der Feuchtigkeit der Ansaugluft;
c) optionales Erhöhen der Temperatur der Ansaugluft; und
d) Zuführen der Ansaugluft direkt zu einem zu prüfenden Verbrennungsmotor oder zu einer zusätzlichen Vorrichtung, die deren Druck ferner konditioniert.

9. Verfahren nach Anspruch 8, ferner umfassend das Filtern der Ansaugluft, bevor deren Druck erhöht wird.

10. Verfahren nach einem der Ansprüche 8 bis 9, umfassend den Schritt (b) des Absenkens der Temperatur und der Feuchtigkeit der Ansaugluft unter Verwendung eines Wasser-Luft-Kühlers, gefolgt von einem Kühler, wodurch der Gesamtenergieverbrauch des Schritts (b) reduziert wird.

11. Verfahren nach einem der Ansprüche 8 bis 10, umfassend den Schritt (b) des Absenkens der Temperatur und der Feuchtigkeit der Ansaugluft, ferner umfassend das Entfernen kondensierter Feuchtigkeit aus der Ansaugluft nach dem Schritt (b) unter Verwendung eines ersten Zyklonabscheiders (18).

12. Verfahren nach einem der Ansprüche 8 bis 11, ferner umfassend vor Schritt (d) einen Schritt zur Erhöhung der Feuchtigkeit der Ansaugluft.

13. Verfahren nach Anspruch 12, ferner umfassend die Verwendung eines Teils der Ansaugluft selbst, um die Temperatur des Wassers zu erhöhen, das in dem Schritt des Erhöhens der Feuchtigkeit der Ansaugluft verwendet wird.

14. Verfahren nach einem der Ansprüche 8 bis 13, ferner umfassend das Entfernen kondensierter Feuchtigkeit aus der Ansaugluft vor dem Schritt (d) unter Verwendung eines zweiten Zyklonabscheiders (30).

15. Verfahren nach einem der Ansprüche 8 bis 14, wobei Schritt (d) die weitere Konditionierung des Drucks der Ansaugluft umfasst, bevor die Ansaugluft direkt einem zu prüfenden Verbrennungsmotor zugeführt wird.

16. Verwendung der Vorrichtung nach einem der Ansprüche 1 bis 7 zur Konditionierung von Druck, Temperatur und Feuchtigkeit der Ansaugluft, die einem Verbrennungsmotor zu dessen Prüfung zugeführt werden soll.

## Revendications

1. Dispositif de conditionnement d'air d'admission pour tester des moteurs à combustion interne, comprenant :
- une ligne transportant de l'air d'admission, d'un point d'entrée (a) à un point de sortie (k), la ligne comprenant en outre les composants suivants entre ledit point d'entrée (a) et ledit point de sortie (k) ;
- un compresseur mécanique (12) comprimant de l'air d'admission à des valeurs de pression et de température souhaitées ;
- une ligne de séchage d'éléments placés entre des points (b) et (f), en aval du compresseur mécanique (12), lesdits éléments comprenant :
▪ un refroidisseur (16) abaissant la température et l'humidité de l'air d'admission,
▪ un premier séparateur cyclonique (18) éliminant l'humidité condensée de l'air d'admission ;
- une première vanne de dérivation (20) contournant à la fois le refroidisseur (16) et le premier séparateur cyclonique (18) ;
- un réchauffeur (22) augmentant la température de l'air d'admission, situé en aval d'un point d'intersection (g) entre un chemin provenant du séparateur cyclonique (18) et un chemin provenant de la première vanne de dérivation (20) ;
- une seconde vanne de dérivation (24) contournant le réchauffeur (22) ;
- un humidificateur (26) situé entre le réchauffeur (22) et le point de sortie (k) ; et
- une première vanne 0/1 (28) laissant/empêchant l'air d'admission de passer par ledit humidificateur (26), l'humidificateur (26) étant également contourné par la seconde vanne de dérivation (24) ;
grâce à quoi l'air d'admission conditionné au point de sortie (k) est envoyé directement à un moteur à combustion interne à tester ou à un dispositif supplémentaire qui conditionne en outre la pression de celui-ci.

2. Dispositif selon la revendication 1, comprenant en outre un filtre à air (10) avant le point d'entrée (a) de la ligne.

3. Dispositif selon l'une quelconque des revendications précédentes, comprenant en outre un rafraîchisseur eau-air (14) avant le refroidisseur (16), le rafraîchisseur eau-air (14) étant également contourné par la première vanne de dérivation (20).

4. Dispositif selon l'une quelconque des revendications précédentes, comprenant en outre un échangeur de chaleur eau-air (34) à l'intérieur dudit humidificateur (26) et une seconde vanne 0/1 (32) laissant/empêchant l'air d'admission de passer par ledit échangeur de chaleur eau-air (34).

5. Dispositif selon l'une quelconque des revendications précédentes, comprenant en outre un second séparateur cyclonique (30) avant le point de sortie (k) éliminant l'humidité condensée de l'air d'admission.

6. Dispositif selon l'une quelconque des revendications précédentes, dans lequel le réchauffeur (22) est un réchauffeur électrique.

7. Dispositif selon l'une quelconque des revendications précédentes, comprenant en outre un moyen de conditionnement de pression situé en aval du point de sortie (k), conditionnant en outre la pression de l'air d'admission avant de l'apporter dans un moteur à combustion interne à tester.

8. Procédé de conditionnement d'air d'admission pour tester des moteurs à combustion interne à l'aide du dispositif selon l'une quelconque des revendications 1 à 7, comprenant les étapes de :
a) augmentation de la pression de l'air d'admission ;
b) facultativement, abaissement de la température et de l'humidité de l'air d'admission ;
c) facultativement, augmentation de la température de l'air d'admission ; et
d) apport de l'air d'admission directement dans un moteur à combustion interne à tester ou un dispositif supplémentaire, conditionnant en outre la pression de celui-ci.

9. Procédé selon la revendication 8, comprenant en outre le filtrage de l'air d'admission avant d'en augmenter la pression.

10. Procédé selon l'une quelconque des revendications 8 à 9, comprenant l'étape (b) d'abaissement de la température et de l'humidité de l'air d'admission à l'aide d'un rafraîchisseur eau-air suivi d'un refroidisseur, réduisant ainsi la consommation énergétique globale de ladite étape (b).

11. Procédé selon l'une quelconque des revendications 8 à 10, comprenant l'étape (b) d'abaissement de la température et de l'humidité de l'air d'admission, comprenant en outre l'élimination de l'humidité condensée de l'air d'admission après ladite étape (b) à l'aide d'un premier séparateur cyclonique (18).

12. Procédé selon l'une quelconque des revendications 8 à 11, comprenant en outre, avant l'étape (d), une étape d'augmentation de l'humidité de l'air d'admission.

13. Procédé selon la revendication 12, comprenant en outre l'utilisation d'une partie de l'air d'admission lui-même pour augmenter la température de l'eau utilisée dans ladite étape d'augmentation de l'humidité de l'air d'admission.

14. Procédé selon l'une quelconque des revendications 8 à 13, comprenant en outre l'élimination de l'humidité condensée de l'air d'admission avant ladite étape (d) à l'aide d'un second séparateur cyclonique (30).

15. Procédé selon l'une quelconque des revendications 8 à 14, dans lequel l'étape (d) comprend le conditionnement supplémentaire de la pression de l'air d'admission avant d'apporter l'air d'admission directement dans un moteur à combustion interne à tester.

16. Utilisation du dispositif selon l'une quelconque des revendications 1 à 7 pour conditionner la pression, la température et l'humidité de l'air d'admission destiné à être apporté dans un moteur à combustion interne pour son test.
